Europäisches Patentamt

European Patent Office

Office européen des brevets

(19)

(11) Publication number: **0 109 334**
A2

(12) **EUROPEAN PATENT APPLICATION**

(21) Application number: 83402145.3

(51) Int. Cl.³: **B 29 C 25/00**

(22) Date of filing: 04.11.83

(30) Priority: 10.11.82 JP 197344/82

(43) Date of publication of application: 23.05.84
Bulletin 84/21

(84) Designated Contracting States: **DE FR GB**

(71) Applicant: SHIN-ETSU CHEMICAL CO., LTD., Asahitokai Bldg. 6-1 Otemachi 2-chome, Chiyoda-ku Tokyo 100 (JP)

(72) Inventor: Ueno, Susumu Shin-Etsu kagaku Kougyou, Doai Shataku 3-3-8 9809-7, Yatabe, Hazaki-cho Kashima-gun Ibaraki-ken (JP)
Inventor: Kamata, Hideaki, c/o Hapi-Haitsu 508 4-28-1, Gyoutoku-Ekimae, Ichikawa-shi Chiba-ken (JP)

(74) Representative: Armengaud, Alain et al, Cabinet ARMENGAUD AINE 3 Avenue Bugeaud, F-75116 Paris (FR)

(54) A method for imparting improved surface properties to a shaped body of a plastic resin.

(57) The invention provides a novel method for improving the surface properties or, in particular, the susceptibility to adhesive bonding of the surface of a shaped article of a synthetic plastic resin or, in particular, a fluorine-containing organic polymer, polyester resin, polypropylene or the like polymer. The method comprises subjecting the surface of the shaped article to exposure to low temperature plasma of an inorganic gas or, in particular, oxidizing gas containing at least 10% by volume of oxygen generated by the glow discharge between electrodes under a reduced pressure, the discharge voltage between the electrodes being at least 4,000 volts.

010933₄

# A METHOD FOR IMPARTING IMPROVED SURFACE PROPERTIES
# TO A SHAPED BODY OF A PLASTIC RESIN

## BACKGROUND OF THE INVENTION

The present invention relates to a method for imparting improved surface properties to a shaped article of a plastic resin or, more particularly, to a method for imparting improved susceptibility to adhesive bonding to a shaped body of a synthetic plastic resin.

Shaped articles of a synthetic plastic resin such as those in the form of a film are used, although there may be cases where they are used without further fabrication or working, sometimes with further fabrication or working such as printing with a printing ink or lamination with one or more of other films of different resins or other materials. One of the desirable conditions in such a use of a shaped article of a synthetic plastic resin is that the surface thereof is highly susceptible to adhesive bonding to or receptive of the printing ink, adhesive and other polymeric materials although such a requirement can not always be satisfied in most of the synthetic plastic resins.

There have been proposed several methods for the improvement of the surface properties of a shaped article of a synthetic plastic resin in respect of the susceptibility to adhesive bonding including the wet processes using an acid or alkali solution, treatment or undercoating of the shaped article with a primer, treatment with electric corona discharge and the like. None of these methods, however, is quite satisfactory in one or more respects. For example, the first mentioned wet processes are industrially not acceptable not only due to the toxicity or deleterious reactivity of the acid or alkali per se but also due to the problem in the disposal of sewage containing acid or alkali. The method of primer treatment is economically disadvantageous because the method involves troublesome additional steps of coating with an expensive primer and drying of the coated surface. Further, the method of corona discharge treatment is not always quite satisfactory due to the poor durability of the effect so that the improvement obtained by the treatment is relatively rapidly lost in the lapse of time. In addition, the effectiveness of this method is relatively low and the method is almost ineffective when the plastic resin is a fluorine-containing organic polymer such as polytetrafluoroethylene, copolymers of tetrafluoroethylene and hexafluoropropylene and the like, polyester resin, polypropylene and so on.

## SUMMARY OF THE INVENTION

An object of the present invention is therefore to provide a novel and improved method for imparting improved surface properties or, in particular, improved susceptibility to adhesive bonding to the surface of a shaped article of a

- 3 -          010933[4]

synthetic plastic resin such as the above mentioned fluorine-containing organic polymers, polyester resins, e.g.
polyethylene tere-phthalate resins, and polypropylenes.

The method of the present invention established as a
result of the extensive investigations undertaken by the inventors with the above object comprises subjecting the surface of the shaped article of the synthetic plastic resin to
exposure to the atmosphere of low temperature plasma of an
inorganic gas, preferably oxygen or an oxygen-containing
gas, of reduced pressure generated by the glow discharge
with application of an electric voltage between the electrodes, the discharge voltage between the electrodes being
at least 4000 volts.

The above described inventive method is very effective
in improving the susceptibility of the surface of the shaped
article to adhesive bonding with other synthetic resins or
printing inks and adhesives and the improvement in the surface properties by the inventive method is quite lasting and
not lost in the lapse of time.

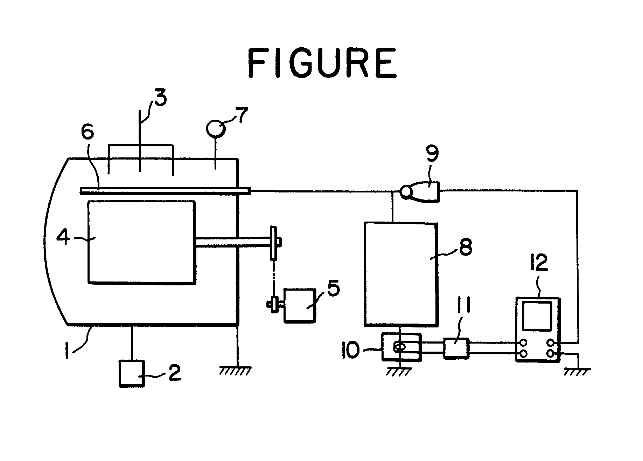

## BRIEF DESCRIPTION OF THE DRAWING

The figure is a schematic illustration of an .apparatus
used in the inventive method.

## DETAILED DESCRIPTION OF THE PREFERRED EMBODIMENTS

The shaped body as the objective material of the inventive method is made of a synthetic plastic resin which is not limited to particular types of polymers although the inventive method is particularly effective for the fluorine-containing organic polymers, polyester resins and polypropylenes. The fluorine-containing polymers are exemplified by polytetrafluoroethylene, copolymers of tetrafluoroethylene and hexafluoropropylene, polymers of trifluorochloroethylene, polyvinylidene fluoride, polyvinyl fluoride and the like. Other synthetic plastic resins to which the inventive method is applicable include polyethylenes, polyamides, polycarbonate resins, polyacetals, ABS resins and the like. The forms of the shaped article are also not limitative including bulky bodies, plates, sheets, films, tubes, filaments, fibers and any other forms fabricated in a conventional process known in the art of plastics fabrication such as extrusion molding, injection molding, calendering, inflation, compression molding and others.

The inventive method for imparting the above mentioned shaped article with improved surface properties is performed by subjecting the surface of the shaped article to exposure to an atmosphere of low temperature plasma of an inorganic gas under reduced pressure generated in a space under a stream of the inorganic gas. The inorganic gases suitable in the inventive method include helium, neon, argon, nitrogen, oxygen, air, nitrous oxide, nitrogen monoxide, nitrogen dioxide, carbon monoxide, carbon dioxide, bromine cyanide, sulfur dioxide, hydrogen sulfide and the like. These inorganic gases may be used either alone or as a mixture of two kinds or more according to need. It is preferable in the present invention that the inorganic gas constituting the plasma atmosphere is oxygen or a gaseous mixture containing at least 10 % by volume of oxygen in view of the higher effectiveness of the plasma treatment. Organic gases may be contained in the plasma atmosphere although the concentration thereof should be limited.

The pressure of the inorganic gas in the plasma atmosphere should be in the range from 0.001 to 10 Torr or, preferably, from 0.01 to 1 Torr. When an electric power of 10 watts to 100 kilowatts at a high frequency of 10 kHz to 100 MHz is supplied to the electrodes installed in the space kept under the above mentioned reduced pressure, electric discharge readily takes place within the space to form an atmosphere of low temperature plasma. The frequency band of the electric power is not particularly limited to the above mentioned high frequency range but may be direct current or low frequency to microwave range although the high frequency range is preferred.

The arrangement of the discharge electrodes is not particularly limitative in the apparatus for the treatment with low temperature plasma although it is preferable that the electrodes are installed inside the plasma chamber. The electrodes may be installed outside the plasma chamber or a single coiled electrode may be provided surrounding the plasma chamber. The electrodes are connected to the power source, e.g. high frequency generator, either by capacitance coupling or by inductance coupling and one or a set of the electrodes, when two sets of electrodes are provided, should usually be grounded, the other electrode or the other set of electrodes being a power electrode or a set of power electrodes. The forms of the electrodes are also not particularly limitative including plate-like, ringwise, rod-like and cylindrical forms and the grounded and power electrodes may have the same form or different forms each from the other. A convenient disposition of the electrodes is that the walls of the plasma chamber are made of a metal to serve as the grounded electrode and a metal-made electrode of rod-like or other form held inside the plasma chamber serves as the power electrode.

The low temperature plasma to which the shaped article is exposed in the inventive method can be readily generated by the glow discharge within the space kept under a reduced pressure of an inorganic gas by applying a suitable discharge voltage between the discharge electrodes. It has been unexpectedly discovered that the value of this discharge voltage is very significant and should be at least 4000 volts so that the polymeric shaped article, e.g. films, plates, sheets, tubes, filaments and the like, having been exposed to the low temperature plasma can be imparted with remarkably improved susceptibility to adhesive bonding. The effectiveness of the plasma treatment is further increased when the discharge voltage is increased from 4,000 volts to 10,000 volts or higher correspondingly while the effectiveness may be insufficient, if not ineffective, with a discharge voltage lower than 4000 volts unless the treatment is unduly prolonged to cause economical disadvantages. The discharge voltage has no particular upper limit although it should be taken into consideration that an excessively high discharge voltage necessarily is accompanied by the problems of heat evolution which may adversely affect the properties of the polymeric shaped article under treatment if not to mention the economical disadvantage due to the increased energy loss.

It should be noted that, in order to increase the discharge voltage to 4000 volts or higher, the power electrode should be provided with an insulating coating having sufficient dielectric strength since application of a high voltage between the electrodes with the metal, e.g. copper, iron or aluminum, surfaces exposed bare may lead to the predominance of the discharge current limiting the discharge voltage to about 1,000 volts at the highest. In such a condition of the electrode insulation, the desired effect of the improvement in the adhesive bonding can of course be hardly expected for the shaped articles of the synthetic plastic resin.

The material for the insulating coating on the surface of the electrode made of a metal, e.g. copper, iron and aluminum, should preferably be a porcelain enamel, glass or ceramic from the standpoint of heat resistance and the dielectric strength thereof should preferably be 10,000 volts/mm or higher as measured with D.C. voltage application.

In addition to the above mentioned conditions of the discharge voltage of 4,000 volts or higher and the reduced pressure of the atmosphere in the range from 0.001 to 10 Torr, further desirable conditions are that the density of the power consumption should be at least 2.5 watts/cm$^2$ on the surface of the power electrode and the distance between the grounded and power electrodes should be in the range from 1 to 20 cm in order to obtain stable glow discharge for generating low temperature plasma within the space of the plasma chamber. When the pressure of the gaseous atmosphere exceeds 10 Torr, an unduly large electric power is necessitated to generate low temperature plasma with large heat evolution while the electric discharge may be unstable when the pressure of the gaseous atmosphere is lower than 0.001 Torr. When the density of the power consumption is smaller than 2.5 watts/cm$^2$, the discharge voltage as high as desired can hardly be maintained so that the effect of improving adhesive bonding may be insufficient. When the distance between the grounded and power electrodes is smaller than 1 cm, the polymeric shaped articles under treatment sometimes suffer the adverse effect of the heat evolved on the surface of the electrodes while an excessively large distance between the electrodes over 20 cm is undesirable due to the disadvantages caused by the large size of the apparatus as well as the large power consumption with unduly large energy loss.

It should be noted that the effect of the treatment with low temperature plasma generated by the glow discharge is limited to the very surface of the shaped article as an inherent characteristic of the plasma treatment so that, despite the profound improvement or modification in the surface properties, the shaped article of the synthetic plastic resin can retain the advantageous properties of the bulk body inherent to the plastic resin. For example, the shaped article of the synthetic plastic resin is imparted with greatly improved susceptibility to adhesive bonding without decrease in the mechanical strengths and other properties inherent to the respective plastic resin so that the usefulness of the shaped article is never decreased by the addition of the improved surface properties.

Following are the examples to illustrate the procedure and effectiveness of the inventive method in more detail but not to limit the scope of the invention in any way.

The apparatus used in the following examples is schematically illustrated in the accompanying figure. The drum-wise plasma chamber 1 is made of a stainless steel and can be evacuated by means of the vacuum pump 2 connected thereto to a vacuum of 0.001 Torr or below of the pressure. The plasma chamber 1 is also connected to a gas inlet 3 opening inside the chamber 1. It is optional according to need that the end of the gas inlet 3 is divided in manifold (in three branches in the figure) with an object to ensure uniformity of the atmospheric conditions inside the plasma chamber 1. Inside the plasma chamber 1, a rotatable cylindrical electrode 4 made also of a stainless steel is provided as supported vacuum-tightly in a cantilever manner by a shaft penetrating the face plate of the plasma chamber 1 in such a manner that this cylindrical electrode can be rotated by means of the electric motor 5 approximately coaxially with the drum-wise plasma chamber 1 at a controllable velocity of rotation. This cylindrical electrode 4 is electrically grounded through the plasma chamber 1. In order to facilitate control of the temperature of the plasma treatment, a heating or cooling medium can be passed through inside of this rotatable cylindrical electrode 4. Further, a rod-like electrode 6, which serves as the power electrode, is provided inside the plasma chamber 1 in parallel with the axis of rotation of the cylindrical electrode 4 to form a gap of uniform width therebetween as electrically insulated from the plasma chamber 1 or the cylindrical electrode 4. The pressure inside the plasma chamber 1 is measured with a Pirani gauge 7 connected to the chamber 1.

The power electrode 6 is connected to the power output terminal of a high frequency generator 8, the other terminal thereof being grounded, to apply a high frequency voltage between the grounded electrode 4 and the power electrode 6. The discharge voltage between the grounded and power electrodes 4,6 can be determined by means of a high-voltage probe 9 connected to a two-channel synchroscope 12 which also serves to determine the discharge current between the electrodes 4,6 by means of a current probe 10 connected thereto through a termination 11.

In the above described metering assembly for high frequency power supply, the peak-to-peak value of the discharge voltage ($V_{p-p}$) is readily determined from the voltage shown by the amplitude of the image for the corresponding channel on the screen of the synchroscope 12 and multiplied by the reciprocal of the attenuation ratio in the high-voltage probe 9 while the discharge current is determined from the amplitude of the image for the second channel on the screen of the synchroscope 12 as multiplied by the sensitivity of the termination 11. The phase difference between the discharge voltage and the discharge current can be determined from the displacement between the wave forms for the voltage and current shown on the screen of the two-channel synchroscope 12.

Assuming an ideal sine wave form for each of the discharge voltage and current, then the electric power of the discharge is given by the equation:

$$P = (E/2\sqrt{2}) \cdot (I/2\sqrt{2}) \cdot \cos\theta = (EI/8) \cdot \cos\theta \ ,$$

in which P is the electric power of discharge in watts, E is the (peak-to-peak) discharge voltage in volts, I is the (peak-to-peak) discharge current in amperes and $\theta$ is the phase difference between the discharge voltage and current.

Example 1.

A sheet of a copolymeric resin of tetrafluoroethylene and hexafluoropropylene having a thickness of 100 $\mu$m was spread on and applied to the surface of the cylindrical rotatable electrode in the plasma chamber of the low temperature plasma treatment apparatus illustrated in the accompanying figure and the plasma chamber was evacuated. When the pressure inside the plasma chamber had reached 0.001 Torr, introduction of argon and oxygen was started each at a rate of 50 N ml/minute through the gas inlet so that the pressure inside the plasma chamber was kept constant at 0.1 Torr by the balance of the coninuous evacuation and gas introduction.

- 13 -

0109334

Under the above described condition of the atmosphere inside the plasma chamber, low temperature plasma was generated by supplying a high frequency electric power at a frequency of 200 kHz to the electrodes disposed to have a gap of 5 cm width. The output power of the high frequency generator was controlled in the range from 0.8 to 9.3 kilowatts so that the peak-to-peak voltage between the electrodes was varied in the range from 2,000 to 10,000 volts. Since the electrode had a surface area of 500 $cm^2$ effective for the discharge, the power density on the electrode surface was varied in the range from 1.6 to 18.6 watts/$cm^2$. Four runs of the plasma treatment were performed in the above described manner with different lengths of treatment time for each of the conditions of the plasma discharge in respect of the voltage so that the overall integrated power consumptions on unit surface area of the electrode were 5, 10, 20 and 40 watts·seconds/$cm^2$.

Each of the thus plasma-treated resin sheets was cut into two pieces which were bonded together on the plasma-treated surfaces with an epoxy adhesive (Bond E Clearset, a product by Konishi & Co.) and the adhesive bonding strength was determined after curing of 48 hours at room temperature by T-wise peeling according to the method specified in JIS K 6854 to give the results shown in Table 1 below. Meanwhile, substantially no peeling resistance was exhibited in the same test with the resin sheet before the plasma treatment.

Table 1

| Discharge voltage, peak-to-peak, volts | Power applied, kW | Power density, $W/cm^2$ | Integrated power output, $W \cdot sec/cm^2$ | | | |
|---|---|---|---|---|---|---|
| | | | 5 | 10 | 20 | 40 |
| 2000 | 0.8 | 1.6 | 0.1 | 0.1 | 0.1 | 0.1 |
| 3000 | 1.3 | 2.6 | 0.1 | 0.1 | 0.2 | 0.2 |
| 4000 | 1.9 | 3.8 | 1.0 | 1.4 | 2.0 | 2.2 |
| 5000 | 2.5 | 5.0 | 1.2 | 1.6 | 2.2 | 2.4 |
| 7000 | 4.3 | 8.6 | 1.8 | 2.0 | 2.7 | 2.7 |
| 10000 | 9.3 | 18.6 | 2.0 | 2.6 | 3.0 | 3.0 |

(T-wise peeling resistance in kg/25mm)

Example 2.

A sheet of polyethylene terephthalate resin having a thickness of 110 μm was treated with low temperature plasma in about the same manner as in Example 1 except that the pressure inside the plasma chamber was kept at 0.15 Torr by the balance of continuous evacuation and introduction of oxygen and nitrogen at rates of 80 and 70 N ml/minute, respectively, and the gap width between the electrodes was 8 cm. The frequency of the high frequency electric power supply was 150 kHz.

Six runs of the plasma treatment were undertaken in the above described manner by controlling the power output of the high frequency generator so that the peak-to-peak voltage between the electrodes was varied in the range from 2,000 to 10,000 volts. The length of the plasma treatment time in each run was controlled to give an overall integrated power output of 10 watts·seconds/cm$^2$.

Each of the thus plasma-treated resin sheets was bonded to a cotton cloth by use of an aqueous emulsion-type adhesive of polyvinyl acetate for woodworks (Cemedyne White, a product by Cemedyne Co.) and the adhesive bonding strength by T-wise peeling was determined after 48 hours of curing at room temperature according to the procedure specified in JIS K 6854 to give the results shown in Table 2 below. On the other hand, substantially no peeling resistance was exhibited in the same test using the resin sheet before the plasma treatment. lt is clear from the results in this table that the voltage of 4000 volts is very critical and the effect of significant improvement of the adhesive bonding strength can be obtained only by the plasma treatment with a peak-to-peak voltage of 4,000 volts or higher.

Example 3.

A biaxially oriented polypropylene film having a thickness of 50 μm was treated with low temperature plasma in substantially the same manner as in the preceding example except that the pressure inside the plasma chamber was kept

T a b l e   2

| Discharge voltage, peak-to-peak, volts | T-wise peeling resistance, kg/25 mm |
|---|---|
| 2000 | 0.5 |
| 3000 | 0.7 |
| 4000 | 4.0 |
| 5000 | 5.1 |
| 7000 | larger than 7[*) |
| 10000 | larger than 7[*) |

*) Resin sheet was broken.

at 0.15 Torr by the balance of continuous evacuation and introduction of gases of oxygen and argon at rates of 80 and 70 N ml/minute, respectively, and the frequency of the high frequency electric power supply was 13.56 MHz. The peak-to-peak discharge voltage between the electrodes in seven runs was varied in the range from 2,000 to 8,000 volts by controlling the power output of the high frequency generator and the length of the plasma treatment time was determined to give an overall integrated power consumption per unit area of the electrode surface of 5 watts·seconds/$cm^2$ in each of the runs.

Each of the thus plasma-treated resin films was bonded to a cotton cloth by use of a room temperature-vulcanizable pasty silicone rubber composition curable with formation of acetic acid by the condensation reaction (KE 45-T, a product by Shin-Etsu Chemical Co.) as an adhesive and the adhesive bonding strength was determined by T-wise peeling after 48 hours of curing at room temperature accordng to the procedure specified in JIS K 6854 to give the results shown in Table 3 below. On the other hand, substantially no peeling resistance was exhibited in the same test with the resin film before the plasma treatment. As is clear from the results in this table, the discharge voltage of 4,000 volts is very critical and effects of significant improvement of the adhesive bonding strength can be obtained only by the plasma treatment with a peak-to-peak discharge voltage of 4,000 volts or higher.

Example 4.

The same resin sheet as used in Example 1 was treated with low temperature plasma in about the same manner as in Example 1 except that the pressure inside the plasma chamber was kept constant at 0.1 Torr by the balance of continuous evacuation and introduction of a gaseous mixture of nitrogen and oxygen in a varied proportion at a rate of 100 N ml/minute as a total and the peak-to-peak discharge voltage was 7,000 volts in each run between the electrodes held with a gap width of 4 cm. The frequency of the high frequency

Table 3

| Discharge voltage, peak-to-peak, volts | T-wise peeling resistance, kg/25 mm |
|---|---|
| 2000 | 0.5 |
| 3000 | 0.6 |
| 4000 | 4.2 |
| 5000 | larger than 5[*)] |
| 6000 | ditto |
| 7000 | ditto |
| 8000 | ditto |

*) Resin film was broken.

electric power supply was 110 kHz and the length of the plasma treatment time was 4 seconds in each of the nine runs.

The thus plasma-treated resin sheets were subjected to the test of the adhesive bonding strength in the same manner as in Example 1 to give the results shown in Table 4 below together with the mixing ratios of oxygen and nitrogen.

As is clear from the results in this table, the content of oxygen in the gaseous atmosphere is very important and effects of significant improvement of the adhesive bonding strength can be obtained only by the low temperature plasma treatment in an atmosphere' in which the content of oxygen is 10 % by volume or larger.

T a b l e   4

| Mixing ratio of oxygen:nitrogen by volume | T-wise peeling resistance, kg/25 mm |
|:---:|:---:|
| 0:100 | 0.2 |
| 5:95 | 0.4 |
| 10:90 | 2.1 |
| 20:80 | 2.4 |
| 40:60 | 2.6 |
| 60:40 | 2.6 |
| 80:20 | 2.5 |
| 90:10 | 2.4 |
| 100:0 | 2.4 |

WHAT IS CLAIMED IS:

1.    A method for imparting improved surface properties to a shaped article of a synthetic plastic resin which comprises subjecting the surface of the shaped article to exposure to an atmosphere of low temperature plasma of an inorganic gas under a reduced pressure generated by glow discharge with application of an electric voltage between a grounded electrode and a power electrode, the discharge voltage between the electrodes being at least 4,000 volts.

2.    A method for imparting improved surface properties to a shaped article of a synthetic plastic resin selected from the group consisting of fluorine-containing organic polymers, polyester resins and polypropylenes which comprises subjecting the surface of the shaped article to exposure to an atmosphere of low temperature plasma of an inorganic gas under a reduced pressure generated by glow discharge with application of an electric voltage between a grounded electrode and a power electrode, the discharge voltage between the electrodes being at least 4,000 volts.

3.    The method as claimed in claim 2 wherein the inorganic gas is oxygen or a gaseous mixture containing at least 10 % by volume of oxygen.

4.    The method as claimed in claim 2 wherein the reduced pressure is in the range from 0.001 to 10 Torr.

5.    The method as claimed in claim 2 wherein the surface of the electrodes is coated with a heat-resistant, electrically insulating material.

6.    The method as claimed in claim 2 wherein the grounded electrode and the power electrode are apart from each other at a distance from 1 to 20 cm.

7.    The method as claimed in claim 2 wherein the density of the electric power on the surface of the power electrode is at least 2.5 watts/cm$^2$.

# FIGURE